# FASCICULE DE BREVET EUROPEEN

(11) **EP 1 991 098 B1**
(45) Date de publication et mention de la délivrance du brevet: **02.09.2009**
(21) Numéro de dépôt: 07731029.0
(22) Date de dépôt: 22.02.2007
(51) Int. Cl.: A47J 45/10

(54) **DISPOSITIF DE PREHENSION AMOVIBLE AVEC MOYENS D'OUVERTURE DES ORGANES FORMANT PINCE**
ABNEHMBARE GREIFVORRICHTUNG, DIE MITTEL ZUM ÖFFNEN VON BACKENBILDENDEN ELEMENTEN UMFASST
DETACHABLE GRIP DEVICE COMPRISING MEANS FOR OPENING JAW-FORMING ELEMENTS

(30) Priorité: 06.03.2006 FR 0601988
(43) Date de publication de la demande: 19.11.2008
(73) Titulaire: SEB SA, 69130 Ecully (FR)
(72) Inventeur: LORTHIOIR, Christophe, F-74150 Bloye (FR)
(74) Mandataire: Lemoine, Jean-Sébastien
(86) Numéro de dépôt international: PCT/FR2007/000324
(87) Numéro de publication internationale: WO 2007/101924

(56) Documents cités:
- EP-A1- 0 906 742

## Description

La présente invention concerne un dispositif de préhension amovible pour article culinaire, par exemple un manche amovible pour casserole.

On connaît un dispositif de préhension amovible du type qui comprend un corps de préhension, deux organes formant pince mobiles en translation l'un par rapport à l'autre selon une direction longitudinale entre une position ouverte et une position fermée dans laquelle ils sont adaptés à pincer la jupe d'un article culinaire, des moyens de déplacement des organes formant pince configurés de façon à pouvoir passer d'un état stable de fermeture dans lequel les deux organes formant pince sont dans leur position fermée, à un état stable d'ouverture dans lequel les deux organes formant pince sont dans leur position ouverte, et inversement, en passant par un état intermédiaire d'équilibre instable, et des moyens d'ouverture des organes formant pince mobiles entre une position de repos dans laquelle ils sont sans effet sur l'état des moyens de déplacement, et une position d'activation dans laquelle ils sont adaptés à entraîner les moyens de déplacement initialement dans leur état de fermeture au-delà de leur état intermédiaire d'équilibre instable.

Un tel dispositif est par exemple décrit dans la demande FR 2 842 717 dans lequel les moyens d'ouverture sont formés par un bouton de commande manuelle qui est monté en translation selon la direction longitudinale, sur la face supérieure du corps de préhension afin qu'en position naturelle, la main qui tient la poignée a le pouce sur le bouton. De plus, pour des raisons de sécurité (afin d'éviter un passage involontaire du bouton de sa position de repos à sa position d'activation), l'orientation du déplacement du bouton est le suivant : le bouton en position de repos est plus proche de l'extrémité longitudinale en contact avec l'article culinaire qu'il ne l'est quand il est dans sa position d'activation. De ce fait, pour faire passer le bouton en position d'activation, il est nécessaire de replier le pouce, ce qui n'est pas un mouvement pouvant être fait involontairement.

Le problème de ce dispositif de préhension est que cette orientation du déplacement des moyens d'ouverture est si peu naturelle qu'elle s'est avérée peu pratique, notamment du fait que les moyens de déplacement des organes formant pince comprennent un levier qui est monté pivotant sur la face inférieure du corps de préhension, et que, pour actionner l'ouverture des organes formant pince il est nécessaire, non seulement de tirer sur le bouton qui est disposé sur la surface supérieure, mais également de libérer le levier qui est sur la surface inférieure afin de permettre son déploiement.

La présente invention vise à réaliser un dispositif de préhension amovible du type précité dont les moyens d'ouverture sont conformés de façon à ne pouvoir pas être entraînés dans leur position d'activation de façon involontaire sans que leur déplacement volontaire soit malaisé.

Selon l'invention, dans le dispositif de préhension amovible du type précité, les moyens d'ouverture comprennent au moins un bouton qui est disposé sur un côté longitudinal du corps de préhension, et qui est monté coulissant selon une direction ayant une composante dans la direction transversale.

Ainsi, par cette disposition latérale, ni le pouce qui repose naturellement sur la face supérieure du corps de préhension, ni les autres doigts qui entourent naturellement le corps sur une face latérale et sur là face inférieure, ne peuvent actionner malencontreusement le bouton de commande manuelle. Cependant, par sa disposition latérale, il suffit de déplacer l'index (en le dépliant) jusqu'à ce qu'il atteigne le bouton de commande manuelle.

D'autres particularités et avantages apparaîtront dans la description du mode de réalisation donné à titre d'exemple non limitatif et illustré aux dessins annexés dans lesquels :
La figure 1 est une vue en coupe longitudinale d'un dispositif de préhension amovible selon un premier mode de réalisation, les organes formant pince étant en position ouverte et les moyens de déplacement étant dans leur état d'ouverture,
La figure 2 est une vue similaire à la figure 1, les organes formant pince. étant en position fermée et les moyens de déplacement étant dans leur état de fermeture,
La figure 3 est une vue en perspective de la partie avant du dispositif de préhension amovible,
La figure 4 est une vue de dessus de la cavité réalisée dans le corps de préhension qui est adaptée à recevoir les moyens d'ouverture,
La figure 5 est une vue similaire à la figure 4, la cavité étant occupée par les moyens d'ouverture en position de repos, et
La figure 6 est une vue en coupe d'une partie du dispositif de préhension amovible illustrant l'interaction entre les moyens d'ouverture et les moyens de déplacement.

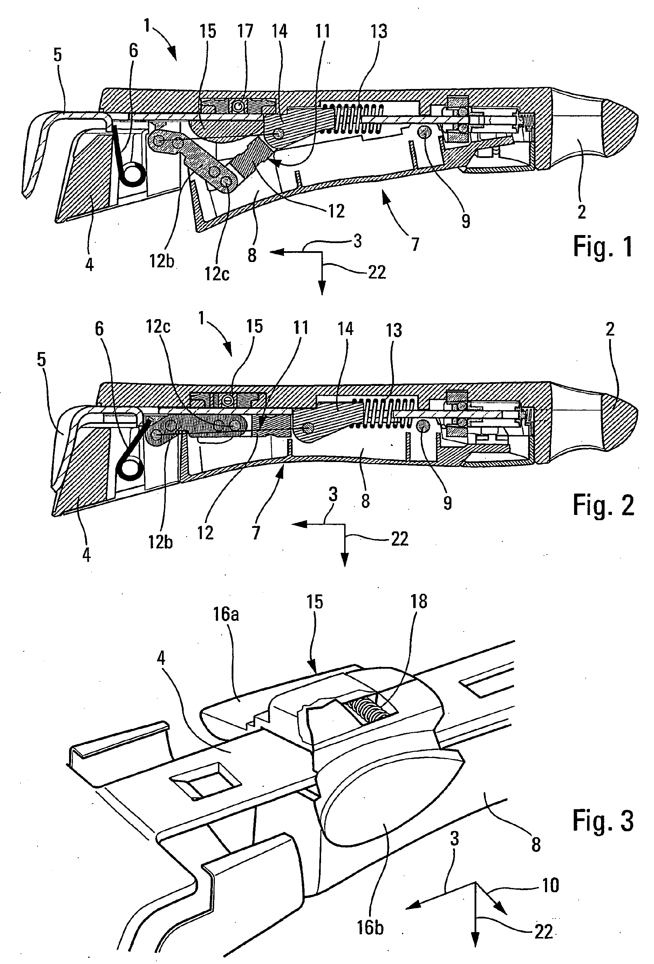

Comme on peut le voir aux figures 1 et 2, un dispositif de préhension amovible 1 pour un article culinaire comprend un corps de préhension 2 qui s'étend principalement selon une direction longitudinale 3. Quand le dispositif de préhension 1 est fixé en une portion de la paroi latérale d'un article culinaire, la direction longitudinale 3 est généralement perpendiculaire à cette portion latérale.

Le dispositif de préhension amovible 1 comprend également deux organes formant pince 4,5 qui sont mobiles l'un par rapport à l'autre (ici en translation selon la direction longitudinale 3) entre une position ouverte et une position fermée dans laquelle ils sont adaptés à pincer la paroi latérale de l'article culinaire. Dans le présent mode de réalisation, l'un 4 des deux organes formant pince est monté de façon immobile sur le corps de préhension 2 (et plus précisément, sur une première extrémité longitudinale de ce corps de façon à pouvoir être en contact avec la surface extérieure de la paroi latérale de l'article culinaire), l'autre 5 étant monté mobile sur le corps 2. De plus, l'organe mobile formant pince 5 est sollicité dans sa position ouverte par un ressort 6.

Par ailleurs, afin de permettre le déplacement des organes formant pince 4,5, le dispositif de préhension amovible comprend des moyens de déplacement 7. Ces moyens de déplacement 7 sont configurés de façon à pouvoir passer d'un état stable de fermeture dans lequel les deux organes formant pince 4,5 sont dans leur position fermée, à un état stable d'ouverture dans lequel les deux organes formant pince 4,5 sont dans leur position ouverte, et inversement, et ceci en passant par un état intermédiaire d'équilibre instable. De ce fait, dans le présent mode de réalisation, les deux organes formant pince 4,5 restent naturellement dans leur position fermée, sans qu'un utilisateur ait à maintenir un quelconque effort sur le dispositif de préhension amovible 1. Dans le présent exemple, les moyens de déplacement 7 comprennent un levier 8 qui est monté pivotant sur le corps de préhension 2 selon un axe de pivotement 9 s'étendant selon une direction transversale 10 perpendiculaire à la direction longitudinale 3, et des moyens de transmission 11 qui permettent le déplacement des organes formant pince 4,5 quand le levier 8 est pivoté. Ici, les moyens de transmission 11 comprennent deux bielles 12, 12b.

Le levier 8 est disposé sur la face inférieure du corps de préhension et est mobile entre une position escamotée et une position déployée en passant par une position intermédiaire d'équilibre instable, positions qui correspondent respectivement aux états de fermeture, d'ouverture et d'équilibre instable des moyens de déplacement 7. En outre, les moyens de déplacement comprennent 7 également un ressort 13 qui est disposé entre l'organe mobile formant pince 5 et un élément 14 (qui fait également partie des moyens de transmission 11) articulé à la première bielle 12 et monté en translation selon la direction longitudinale 3 dans le corps de préhension 2. Ce ressort 13 permet un ajustement de la distance séparant les deux organes formant pince 4,5 en position fermée à l'épaisseur de la paroi latérale de l'article culinaire pincé. La deuxième bielle 12b est montée de façon pivotante, par une première extrémité, au corps de préhension 2, et par une seconde extrémité à la première bielle 12 selon un axe 12c qui est monté coulissant dans une rainure réalisée dans le levier 8.

De plus, le dispositif de préhension amovible 1 comprend des moyens d'ouverture 15 qui permettent de faire passer les organes formant pince 4,5 de leur position stable fermée à leur position ouverte. Les moyens d'ouverture 15 sont mobiles entre une position de repos dans laquelle ils sont sans effet sur l'état des moyens de déplacement 7, et une position d'activation dans laquelle ils sont adaptés à entraîner les moyens de déplacement 7 initialement dans leur état de fermeture au-delà de leur état intermédiaire d'équilibre instable, de sorte qu'une fois cet état franchi, les moyens de déplacement 7 passent naturellement dans leur état stable d'ouverture (et les organes formant pince 4,5 passent naturellement dans leur position ouverte) du fait notamment de l'action du ressort 6 qui entraîne l'organe mobile formant pince 5 et donc l'élément 14 (via le ressort 13), les deux bielles 12,12b et le levier 8.

Les moyens d'ouverture 15 comprennent au moins un bouton 16a,16b qui est disposé sur un côté longitudinal du corps de préhension 2, et qui est monté coulissant selon une direction ayant une composante dans la direction transversale 10. Dans le présent mode de réalisation, les moyens d'ouverture 15 sont formés par deux boutons 16a,16b, chaque bouton 16a,16b étant disposé sur un côté longitudinal du corps de préhension 2 qui lui est propre. Les deux boutons 16a,16b sont montés mobiles en translation dans une cavité 17 qui est réalisée dans le corps de préhension 2, au dessus du logement du levier 8. De plus, les moyens d'ouverture 15 sont sollicités dans leur position de repos par un ressort 18 qui, ici, est disposé dans la cavité 17 entre les deux boutons 16a,16b et prend appui sur ces derniers de façon à les éloigner l'un de l'autre et à faire en sorte qu'en position de repos ils fassent saillie hors du corps de préhension 2 par une ouverture 19 débouchant dans la cavité 17.

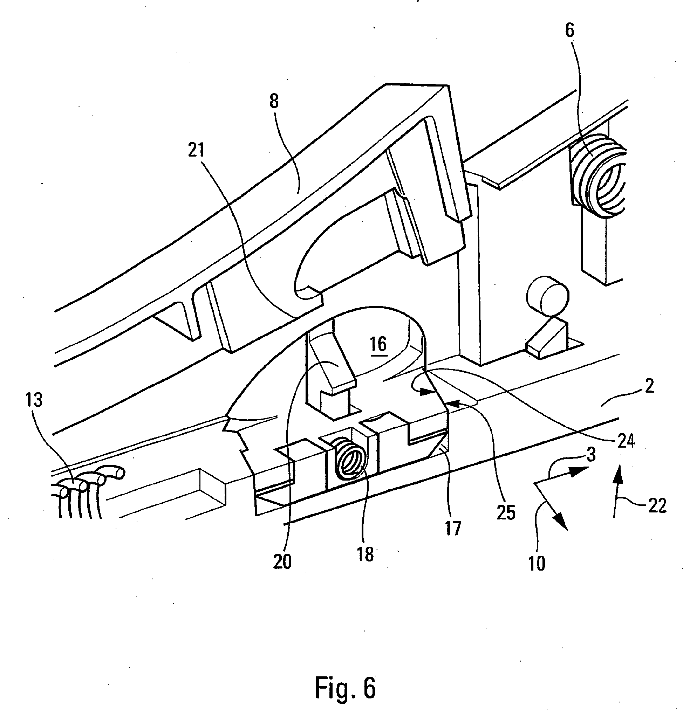

Dans le présent mode de réalisation, l'interaction entre les moyens de déplacement 7 et les moyens d'ouverture 14 qui sont disposés au dessus des moyens de déplacement 7 est réalisée par au moins une surface d'entraînement 20 qui est portée par les moyens d'ouverture 15 (en l'occurrence, une surface d'entraînement 20 est portée par chaque bouton 16a,16b) et qui, quand les moyens d'ouverture 15 sont déplacés de leur position de repos à leur position d'activation, est adaptée à venir en contact contre une surface de réception 21 portée par les moyens de déplacement 7 (en l'occurrence par le levier 8) et à déplacer cette surface de réception 21 de façon à entraîner les moyens de déplacement 7 (le levier 8, et, par l'intermédiaire de l'axe 12c, les deux bielles 12,12b ainsi que l'élément 14) dans leur état d'ouverture (dans sa position déployée) et l'organe mobile formant pince 5 dans sa position ouverte. Comme on peut le voir à la figure 6, pour chaque bouton 16a,16b, la surface d'entraînement 20 est inclinée dans les directions transversale 10 et verticale 22 de sorte que quand le bouton 16a,16b est entraîné dans sa position d'activation par un déplacement dans la direction transversale 10, dans un premier temps, l'écart entre la surface d'entraînement 20 et la surface de réception 21 diminue jusqu'à ce qu'il y ait contact, et dans un deuxième temps, le levier 8 (par la surface de réception 20) est entraîné en pivotement jusqu'à ce qu'il franchisse sa position intermédiaire d'équilibre instable.

Par ailleurs, afin d'améliorer la sécurité du dispositif de préhension amovible 1, la cavité 17 et les deux boutons 16a,16b sont configurés et agencés de sorte que les deux boutons 16a,16b ne peuvent être déplacés jusque dans leur position d'activation que s'ils sont entraînés simultanément. De ce fait, si, malgré la sécurité apportée par l'emplacement particulier des boutons 16a,16b sur le corps de préhension 2, suite à un choc du dispositif de préhension amovible 1 contre un élément quelconque, l'un des deux boutons 16a,16b est heurté de façon être entraîné vers sa position d'activation, cette position ne sera pas atteinte du fait que l'autre bouton 16a,16b n'a pas été également entraîné vers sa position d'activation.

Dans le présent mode de réalisation, cette fonctionnalité est due au fait que la cavité 17 et les deux boutons 16a,16b sont configurés de sorte que les boutons 16a,16b sont monté mobiles en translation selon une direction de déplacement 23 ayant une composante transversale 10 qui permet l'activation des moyens de déplacement 7, et une composante longitudinale 3 qui permet de bloquer le déplacement d'un bouton 16a si l'autre bouton 16b n'est pas également déplacé.

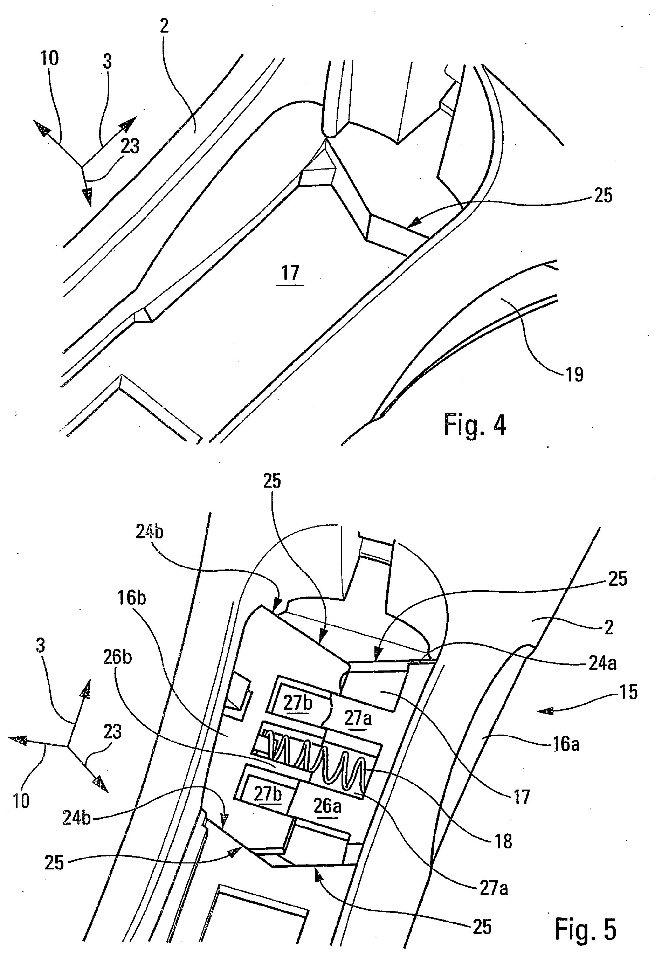

De façon plus précise, comme on peut le voir aux figures 4 et 5, chaque bouton 16a,16b comprend une surface de guidage 24a,24b qui s'étend selon la direction de déplacement 23 et qui est adaptée à coulisser le long d'une rampe de guidage 25 réalisée dans la cavité 17 et parallèle à la surface de guidage 24a,24b correspondante. De ce fait, quand un bouton 16a est entraîné dans la direction transversale 10, il est également déplacé dans la direction longitudinale 3. De façon complémentaire, au moins l'un des boutons 16a comprend une patte 26a qui s'étend selon la direction transversale 10 en direction de l'autre bouton 16b, cet autre bouton 16b comprenant un logement 27b qui reçoit au moins partiellement la patte 26a du premier bouton 16a quelle que soit la position des deux boutons 16a,16b. En l'occurrence, chaque bouton 16a,16b est conformé de façon à comprendre au moins une patte 26a,26b et au moins un logement 27a,27b. Afin de réaliser le blocage des boutons 16a,16b quand ils sont déplacés isolément, les dimensions dans la direction longitudinale 3 du logement 27a et de la patte 26b reçue dans ce logement 27a sont telles que, lorsqu'un seul bouton 16a est déplacé, la patte 26b et le logement 27a qui lui est associé viennent en butée l'un contre l'autre par leur déplacement longitudinal relatif. Du fait de cette mise en butée, le bouton 16b immobile immobilise le bouton 16a déplacé avant que ce dernier ait atteint la position dans laquelle il entraîne les moyens de déplacement 7 dans leur état d'ouverture par franchissement de leur état d'équilibre instable. Ici, afin d'assurer une sécurité maximale, les dimensions dans la direction longitudinale 3 de chaque patte 26a,26b et de chaque logement 27a,27b associé sont sensiblement identiques de sorte que les deux boutons 16a,16b ne peuvent être déplacés que simultanément.

## Revendications

1. Dispositif de préhension amovible (1) comprenant un corps de préhension (2), deux organes formant pince (4,5) mobiles en translation l'un par rapport à l'autre selon une direction longitudinale (3) entre une position ouverte et une position fermée dans laquelle ils sont adaptés à pincer la jupe d'un article culinaire, des moyens de déplacement (7) des organes formant pince (4,5) configurés de façon à pouvoir passer d'un état stable de fermeture dans lequel les deux organes formant pince (4,5) sont dans leur position fermée, à un état stable d'ouverture dans lequel les deux organes formant pince (4,5) sont dans leur position ouverte, et inversement, en passant par un état intermédiaire d'équilibre instable, et des moyens d'ouverture (15) des organes formant pince (4,5) mobiles entre une position de repos dans laquelle ils sont sans effet sur l'état des moyens de déplacement (7), et une position d'activation dans laquelle ils sont adaptés à entraîner les moyens de déplacement (7) initialement dans leur état de fermeture au-delà de leur état intermédiaire d'équilibre instable, **caractérisé en ce que** les moyens d'ouverture (15) comprennent au moins un bouton (16a, 16b) qui est disposé sur un côté longitudinal du corps de préhension (2), et qui est monté coulissant selon une direction de déplacement (23) ayant une composante dans la direction transversale (10) qui est perpendiculaire à la direction longitudinale (3).

2. Dispositif de préhension amovible (1) selon la revendication 1, **caractérisé en ce que** les moyens de déplacement (7) comprennent un levier (8) mobile selon un axe de pivotement (9) s'étendant selon la direction transversale (10) entre une position escamotée et une position déployée en passant par une position intermédiaire d'équilibre instable, ces trois positions correspondant, respectivement, à l'état de fermeture, d'ouverture et d'équilibre instable des moyens de déplacement (7).

3. Dispositif de préhension amovible (1) selon la revendication 1 ou 2, **caractérisé en ce que** les moyens d'ouverture (15) comprennent une surface d'entraînement (20) qui, quand ils (15) sont déplacés de leur position de repos à leur position d'activation, est adaptée à venir en contact contre une surface de réception (21) portée par les moyens de déplacement .(7) et à déplacer cette surface (21) de façon à entraîner les moyens de déplacement (7) dans leur état d'ouverture.

4. Dispositif de préhension amovible (1) selon la revendication 3 dépendante de la revendication 2, **caractérisé en ce que** la surface de réception (21) est portée par le levier (8).

5. Dispositif de préhension amovible (1) selon l'une des revendications 1 à 4, **caractérisé en ce que** les moyens d'ouverture (15) comprennent deux boutons (16a,16b) qui sont montés coulissant dans une cavité (17) réalisée dans le corps de préhension (2), chaque bouton (16a,16b) étant disposé sur un côté longitudinal du corps de préhension, (2) qui lui est propre.

6. Dispositif de préhension amovible (1) selon la revendication 5, **caractérisé en ce que** la cavité (17) et les deux boutons (16a,16b) sont configurés et agencés de sorte que les deux boutons (16a,16b) ne peuvent être déplacés jusque dans leur position d'activation que s'ils sont entraînés simultanément.

7. Dispositif de préhension amovible (1) selon la revendication 6, **caractérisé en ce que** la cavité (17) et les deux boutons (16a,16b) sont configurés et agencés de sorte que la direction de déplacement (23) de chaque bouton (16a,16b) possède une composante longitudinale (3) qui permet de bloquer le déplacement d'un bouton (16a) si l'autre bouton (16b) n'est pas également déplacé.

8. Dispositif de préhension amovible (1) selon la revendication 7, **caractérisé en ce que** chaque bouton (16a,16b) comprend une surface de guidage (24a,24b) s'étendant selon la direction de déplacement (23) correspondante et adaptée à coulisser le long d'une rampe de guidage (25) correspondante qui est réalisée dans la cavité (17) et qui lui est parallèle.

9. Dispositif de préhension amovible (1) selon la revendication 8, **caractérisé en ce qu'**au moins l'un des boutons (16a) comprend une patte (26a) qui s'étend selon la direction transversale (10) en direction de l'autre bouton (16b) qui comprend un logement (27b) recevant au moins partiellement la patte (26a) du premier bouton (16a) quelle que soit la position des deux boutons (16a,16b), les dimensions dans la direction longitudinale (3) du logement (27b) et de la patte (26a) reçue dans ce logement (27b) étant telles que lorsqu'un seul bouton (16a) est déplacé, la patte (26a) et le logement (27b) correspondant viennent en butée l'un contre l'autre par leur déplacement longitudinal (3) relatif et immobilisent le bouton déplacé (16a) avant qu'il ait permis l'entraînement des moyens de déplacement (7) jusqu'à leur état d'équilibre instable.

10. Dispositif de préhension amovible (1) selon la revendication 9, **caractérisé en ce que** les dimensions dans la direction longitudinale (3) de la patte (26a) et du logement (27b) qui la reçoit sont sensiblement identiques de sorte que les deux boutons (16a, 16b) ne peuvent être déplacés que simultanément.

## Claims

1. Detachable grip device (1) comprising a grip body (2), wherein two elements forming jaws (4, 5) that are mobile in translation with respect to one another according to a longitudinal direction (3) between an open position and a closed position in which they are able to clamp the skirt of a kitchen accessory, wherein means of moving (7) the jaw-forming elements (4, 5) configured so as to move from a stable closing state in which the two jaw-forming elements (4, 5) are in their closed position and a stable opening state in which the two jaw-forming elements (4, 5) are in their open position, and inversely, passing via an intermediate unstable equilibrium state, and means (15) of opening the jaw-forming elements (4, 5) mobile between a rest position in which they have no effect on the movement means (7), and an activation position in which they are adapted to drive the movement means (7) initially in their closing state beyond their intermediate unstable equilibrium state, **characterised in that** the opening means (15) comprise at least one button (16a, 16b) that is located on a longitudinal side of the grip body (2), and that is mounted so that it slides according to a direction of movement (23), having a component in the transversal direction (10) that is perpendicular to the longitudinal direction (3).

2. Detachable grip device (1) of claim 1, **characterised in that** the movement means (7) comprise a lever (8) that is mobile about a pivot axis (9) which extends according to the transversal direction (10) between a retracted position and a deployed position, passing via an intermediate unstable equilibrium position, wherein these three positions respectively correspond to the closing, opening and unstable equilibrium states of the movement means (7).

3. Detachable grip device (1) of claims 1 or 2, **characterised in that** the opening means (15) comprise a drive surface (20) which, when they (15) are moved from their rest position to their activation position, can come into contact against an accommodation surface (21) on the movement means (7) and to move this surface (21) so as to drive the movement means (7) to their opening state.

4. Detachable grip device (1) of claim 3, **characterised in that** the accommodation surface (21) is borne by the lever (8).

5. Detachable grip device (1) of any of claims 1 to 4, **characterised in that** the opening means (15) comprise two buttons (16a, 16b) which are mounted so that they slide in a cavity (17) in the grip body (2), wherein each button (16a, 16b) is positioned on a longitudinal side of the grip body (2) that is specific to it.

6. Detachable grip device (1) of claim 5, **characterised in that** the cavity (17) and the two buttons (16a, 16b) are configured and laid out so that the two buttons (16a, 16b) cannot be moved to their activation position unless they are driven simultaneously.

7. Detachable grip device (1) of claim 6, **characterised in that** the cavity (17) and the two buttons (16a, 16b) are configured and laid out so that the direction of movement (23) of each button (16a, 16b) has a longitudinal component (3) which permits the movement of a button (16a) to be blocked if the other button (16b) is not also moved.

8. Detachable grip device (1) of claim 7, **characterised in that** each button (16a, 16b) comprises a guide surface (24a, 24b) which extends according to the direction of movement (23) and that can slide along a corresponding guide ramp (25) in the cavity (17) that is parallel to it.

9. Detachable grip device (1) of claim 8, **characterised in that** at least one of the buttons (16a) comprises a bracket (26a) which extends according to the transversal direction (10) in the direction of the other button (16b) which comprises a housing (27b) which accommodates at least partially the bracket (26a) of the first button (16a) regardless of the position of the two buttons (16a, 16b), wherein the dimensions in the longitudinal direction (3) of the housing (27b) and the bracket (26a) accommodated in this housing (27b) are such that, when a single button (16a) is moved, the bracket (26a) and the corresponding housing (27b) come into contact with one another due to their relative longitudinal movement (3) before it drove the movement means (7) to their open state by passing through their unstable intermediate state.

10. Detachable grip device (1) of claim 9, **characterised in that** the dimensions in the longitudinal direction (3) of the bracket (26a) and the housing (27b) which accommodates it are substantially identical so that the two buttons (16a, 16b) may only be moved simultaneously.

## Patentansprüche

1. Abnehmbare Griffvorrichtung (1), einen Griffkörper (2) umfassend, zwei zangebildende Organe (4, 5), die relativ zueinander in einer Längsrichtung (3) zwischen einer offenen Stellung verschiebbar sind und einer geschlossenen Stellung, in der sie in der Lage sind, den Mantel eines Kochgerätes einzuklemmen, Mittel zur Verschiebung (7) der zangebildenden Organe (4, 5), derart ausbildet, dass sie von einem stabilen Geschlossenzustand, in dem sich die beiden zangebildenden Organe (4, 5) in ihrer geschlossenen Stellung befinden, in einen stabilen Offenzustand, in dem die beiden zangebildenden Organe (4, 5) sich in ihrer offenen Stellung befinden, übergehen können und umgekehrt, wobei sie einen Zwischenzustand instabilen Gleichgewichts durchlaufen, und Öffnungsmittel (15) der zangebildenden Organe (4, 5), die zwischen einer Ruhestellung, in der sie ohne Einfluss auf den Zustand der Verschiebungsmittel (7) sind, und einer Betätigungsstellung, in der sie in der Lage sind, die Verschiebungsmittel (7), die sich anfänglich in ihrer geschlossenen Stellung befinden, über ihre Zwischenstellung instabilen Gleichgewichts hinaus zu bringen, **dadurch gekennzeichnet, dass** die Öffnungsmittel (15) mindestens einen Knopf (16a, 16b) umfassen, der an einer Längsseite des Griffkörpers (2) angeordnet ist und der in einer Verschiebungsrichtung (23) gleitend montiert ist, die eine Komponente in der Querrichtung (10) aufweist, die zur Längsrichtung (3) senkrecht steht.

2. Abnehmbare Griffvorrichtung (1) nach Patentanspruch 1, **dadurch gekennzeichnet, dass** die Verschiebungsmittel (7) einen Hebel (8) umfassen, der um eine Kippachse (9), die in der Querrichtung (10) verläuft, zwischen einer eingezogenen Stellung und einer entfalteten Stellung beweglich ist, indem er eine Zwischenstellung instabilen Gleichgewichts durchläuft, wobei diese drei Stellungen dem Geschlossenzustand, dem Offenzustand bzw. dem Zustand instabilen Gleichgewichts der Verschiebungsmittel (7) entsprechen.

3. Abnehmbare Griffvorrichtung (1) nach Patentanspruch 1 oder 2, **dadurch gekennzeichnet, dass** die Öffnungsmittel (15) eine Mitnahmefläche (20) aufweisen, die dafür ausgelegt ist, mit einer Aufnahmefläche (21) in Berührung zu gelangen, die die Verschiebungsmittel (7) tragen, wenn sie (15) aus ihrer Ruhestellung in ihre Betätigungsstellung verschoben werden, und diese Fläche (21) derart zu verschieben, dass die Verschiebungsmittel (7) in ihren Offenzustand gebracht werden.

4. Abnehmbare Griffvorrichtung (1) nach Patentanspruch 3, wenn er von Patentanspruch 2 abhängig ist, **dadurch gekennzeichnet, dass** der Hebel (8) die Aufnahmefläche (21) trägt.

5. Abnehmbare Griffvorrichtung (1) nach einem der Patentansprüche 1 bis 4, **dadurch gekennzeichnet, dass** die Öffnungsmittel (15) zwei Knöpfe (16a, 16b) umfassen, die in einer Vertiefung (17) gleitend montiert sind, die im Griffkörper (2) ausgebildet ist, wobei jeder Knopf (16a, 16b) auf einer Längsseite des Griffkörpers (2) angeordnet ist, die nur ihm zugehört.

6. Abnehmbare Griffvorrichtung (1) nach Patentanspruch 5, **dadurch gekennzeichnet, dass** die Vertiefung (17) und die beiden Knöpfe (16a, 16b) derart geformt und angeordnet sind, dass die beiden Knöpfe (16a, 16b) nur bis in ihre Betätigungsstellung gebracht werden können, wenn sie gleichzeitig bewegt werden.

7. Abnehmbare Griffvorrichtung (1) nach Patentanspruch 6, **dadurch gekennzeichnet, dass** die Vertiefung (17) und die beiden Knöpfe (16a, 16b) derart geformt und angeordnet sind, dass die Verschiebungsrichtung (23) jedes Knopfes (16a, 16b) eine Komponente in Längsrichtung (3) aufweist, die erlaubt, die Verschiebung eines Knopfes (16a) zu sperren, wenn der andere Knopf (16b) nicht ebenfalls verschoben wird.

8. Abnehmbare Griffvorrichtung (1) nach Patentanspruch 7, **dadurch gekennzeichnet, dass** jeder Knopf (16a, 16b) eine Führungsfläche (24a, 24b) aufweist, die sich in der entsprechenden Verschiebungsrichtung (23) erstreckt und dafür ausgelegt ist, an einer entsprechenden Führungsrampe (25) entlang zu gleiten, die in der Vertiefung (17) ausgebildet ist und zu ihr parallel ist.

9. Abnehmbare Griffvorrichtung (1) nach Patentanspruch 8, **dadurch gekennzeichnet, dass** mindestens einer der Knöpfe (16a) eine Klaue (26a) aufweist, die sich in der Querrichtung (10) in Richtung des anderen Knopfes (16b) erstreckt, der eine Aufnahme (27b) aufweist, die mindestens teilweise die Klaue (26a) des ersten Knopfes (16a) aufnimmt, unabhängig von der Stellung der beiden Knöpfe (16a, 16b), wobei die Abmessungen in der Längsrichtung (3) der Aufnahme (27b) und der Klaue (26a), die in dieser Aufnahme (27b) aufgenommen wird, derart sind, dass die Klaue (26a) und die entsprechende Aufnahme (27b), wenn nur ein einziger Knopf verschoben wird, durch ihre Verschiebung in Längsrichtung (3) zueinander aneinander in Anschlag kommen und den verschobenen Knopf (16a) sperren, bevor er die Mitnahme der Verschiebungsmittel (7) bis in ihren Zustand instabilen Gleichgewichtes erlaubt hätte.

10. Abnehmbare Griffvorrichtung (1) nach Patentanspruch 9, **dadurch gekennzeichnet, dass** die Abmessungen der Klaue (26a) und der sie aufnehmenden Aufnahme (27b) in der Längsrichtung (3) im Wesentlichen identisch sind, so dass die beiden Knöpfe (16a, 16b) nur gleichzeitig verschoben werden können.
